# DEMANDE DE BREVET EUROPEEN

(11) **EP 2 677 131 A1**
(43) Date de publication de la demande: **25.12.2013**
(21) Numéro de dépôt: 13305634.1
(22) Date de dépôt: 17.05.2013
(51) Int. Cl.: F01N 5/02, F02B 47/02, F02M 25/022, F02M 25/028

(54) **Moteur à combustion interne associé à un circuit fermé à cycle de Rankine et à un circuit d'injection d'eau à l'admission du moteur.**

(30) Priorité: 18.06.2012 FR 1201729
(71) Demandeur: IFP Energies nouvelles, 92852 Rueil-Malmaison Cedex (FR)
(72) Inventeur: Bourhis, Guillaume, 92500 Rueil-Malmaison (FR)

(57) **Abrégé**

La présente invention concerne un moteur à combustion interne, notamment pour véhicule automobile, comportant au moins un cylindre (16) avec une chambre de combustion (18), un moyen d'admission d'air (20), et un moyen d'échappement (22) de gaz brûlés.

Selon l'invention, le moteur comprend un échangeur de chaleur (28) commun à un circuit fermé à cycle de Rankine (12) et à un circuit d'injection d'eau (14) à l'admission du moteur.

## Description

La présente invention se rapporte à un moteur à combustion interne, associé à un circuit fermé à cycle de Rankine et à un circuit d'injection d'eau à l'admission du moteur.

Elle concerne plus particulièrement un moteur à combustion interne de type Essence pour véhicule automobile mais n'écarte en aucune manière les autres types de moteur, comme ceux de type Diesel.

Comme cela est largement connu, le cycle de Rankine est un cycle thermodynamique par lequel de la chaleur provenant d'une source de chaleur externe est transmise à un circuit fermé qui contient un fluide de travail.

Ce type de cycle se décompose généralement en une étape durant laquelle le fluide de travail utilisé sous forme liquide, est comprimé de manière isentropique, suivie d'une étape où ce fluide liquide comprimé est chauffé et vaporisé au contact d'une source de chaleur.

Cette vapeur est ensuite détendue, au cours d'une autre étape, de manière isentropique dans une machine de détente, puis, dans une dernière étape, cette vapeur détendue est refroidie et condensée au contact d'une source froide.

Pour réaliser ces différentes étapes, le circuit comprend une pompe-compresseur pour faire circuler et comprimer le fluide sous forme liquide, un évaporateur qui est balayé par un fluide chaud pour réaliser la vaporisation au moins partielle du fluide comprimé, une machine de détente pour détendre la vapeur en transformant l'énergie de cette vapeur en une autre énergie, comme une énergie mécanique ou électrique, et un condenseur grâce auquel la chaleur contenue dans la vapeur est cédée à une source froide, généralement de l'air extérieur qui balaye ce condenseur, pour transformer cette vapeur en un fluide sous forme liquide.

Pour assurer le chauffage et la vaporisation du fluide traversant l'évaporateur, il est connu d'utiliser comme source chaude l'énergie calorifique véhiculée par les gaz d'échappement du moteur à combustion interne en plaçant l'évaporateur sur la ligne d'échappement du moteur, comme cela est mieux décrit notamment par le document FR 2 884 555.

Cette disposition permet d'améliorer l'efficacité énergétique du moteur en récupérant une grande partie de l'énergie perdue à l'échappement pour la transformer en une énergie qui peut être réutilisée sous forme mécanique ou électrique par le moteur, ses accessoires ou les accessoires du véhicule.

Il est également connu d'injecter de l'eau à l'admission d'un moteur pour faire baisser la température de combustion du mélange carburé dans la chambre de combustion du moteur, ce qui permet d'améliorer la consommation en carburant du moteur et de limiter l'émission de polluants, comme les oxydes d'azote (NOx),...

Ceci permet aussi d'augmenter le rendement du moteur grâce au recul de la limite au cliquetis ainsi que de la zone d'enrichissement.

Une des solutions pour injecter cette eau consiste à prévoir un réservoir dans lequel est stockée de l'eau et un dispositif de distribution de cette eau avec une pompe et un ou des injecteurs pour introduire l'eau sous forme liquide ou vaporisée, soit dans le répartiteur d'admission (moteur à injection indirecte) du moteur, soit dans la chambre de combustion du cylindre de ce moteur (injection directe).

Cette configuration a pour inconvénient de nécessiter un réservoir de grande capacité (plusieurs dizaines de litres) occupant un volume important qui n'est pas souvent disponible dans le véhicule automobile. De plus, l'utilisateur du véhicule a pour obligation de remplir ce réservoir avant qu'il ne soit complètement vidé pour éviter un dysfonctionnement du moteur par l'absence d'injection d'eau à l'admission.

Le demandeur a pu constater que, pour un moteur de type Essence fonctionnant à richesse 1, les gaz d'échappement contiennent une grande quantité d'eau, environ 7% massique, essentiellement sous forme vapeur, et qu'il est possible de condenser environ 80% de cette eau en utilisant une puissance de refroidissement d'environ 20kW.

Pour ce faire et comme mieux décrit par le document WO 01/92710, il est prévu de placer sur le parcours de circulation des gaz d'échappement, comme sur la ligne d'échappement, un échangeur de chaleur qui permet de condenser une très grande partie de la vapeur d'eau présente dans ces gaz d'échappement.

L'eau condensée est ensuite collectée dans un réceptacle de stockage pour être ensuite amenée par un dispositif de distribution à un système d'injection de cette eau à l'admission du moteur.

Les motoristes et les constructeurs automobiles ont pour souci constant d'augmenter l'efficacité énergétique ainsi que le rendement du moteur tout en limitant les émissions de polluants provenant de ce moteur.

Pour cela, il leur serait possible d'implanter, sur un moteur à combustion interne, un circuit fermé à cycle de Rankine et un circuit d'injection d'eau à l'admission de ce moteur.

Une telle implantation est cependant difficile de par la mise en place à l'échappement du moteur, et plus particulièrement sur la ligne d'échappement, d'un évaporateur pour chauffer et vaporiser le fluide de travail du circuit à cycle de Rankine et d'un condenseur pour transformer la vapeur d'eau contenue dans les gaz en de l'eau.

En effet, la ligne d'échappement comprend déjà une multiplicité d'organes pour le traitement des gaz d'échappement, comme des catalyseurs de dépollution, des filtres à particules pour le piégeage des particules, des sondes de type lambda, des pots de détente,...

De ce fait, la place disponible pour la mise d'un évaporateur et d'un condenseur est fortement limitée. Pour parvenir à cette mise en place, la taille de l'évaporateur et/ou du condenseur doit être limitée, ce qui ne peut que diminuer leurs performances et par cela dégrader le fonctionnement du circuit à cycle de Rankine et/ou du circuit d'injection d'eau.

La présente invention se propose de remédier aux inconvénients ci-dessus mentionnés grâce à une disposition simple et peu coûteuse pour l'implantation du circuit fermé à cycle de Rankine et du circuit d'injection d'eau sur le moteur.

A cet effet, la présente invention concerne un moteur à combustion interne, notamment pour véhicule automobile, comportant au moins un cylindre avec une chambre de combustion, un moyen d'admission d'air, et un moyen d'échappement de gaz brûlés, **caractérisé en ce qu'il** comprend un échangeur de chaleur commun à un circuit fermé à cycle de Rankine et à un circuit d'injection d'eau à l'admission du moteur.

L'échangeur de chaleur commun peut être placé sur le moyen d'échappement.

Dans le cas où le moyen d'échappement comprend un collecteur d'échappement (23) et une ligne d'échappement (24), l'échangeur de chaleur commun peut être placé sur la ligne d'échappement.

L'échangeur de chaleur commun peut être un échangeur bi-mode avec un évaporateur pour vaporiser le fluide de travail du circuit à cycle de Rankine et avec un condenseur pour transformer en eau la vapeur d'eau des gaz d'échappement pour le circuit d'injection d'eau.

L'échangeur de chaleur commun peut comprendre une entrée et une sortie du fluide de travail du circuit à cycle de Rankine ainsi qu'une entrée et une sortie des gaz d'échappement.

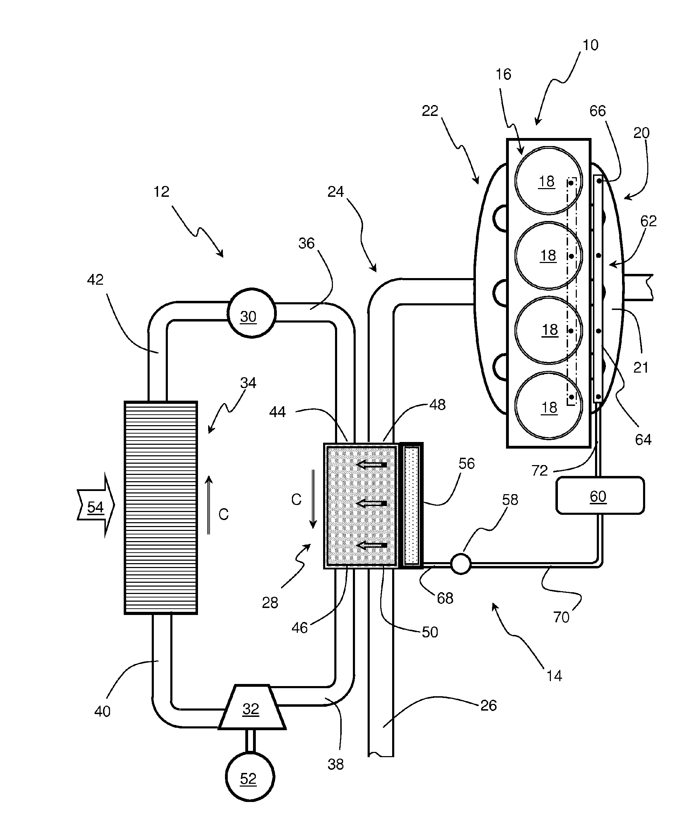

Les autres caractéristiques et avantages de l'invention vont apparaître maintenant à la lecture de la description qui va suivre, donnée à titre uniquement illustratif et non limitatif, et à laquelle est annexée la figure unique montrant un moteur à combustion interne avec un circuit fermé à cycle de Rankine et un circuit d'injection d'eau.

Sur cette figure, un moteur à combustion interne 10 est associé à un circuit fermé à cycle de Rankine 12 et à un circuit d'injection d'eau 14 à l'admission du moteur.

Le moteur à combustion interne comprend au moins un cylindre 16 avec une chambre de combustion 18 à l'intérieur de laquelle se produit la combustion d'un mélange carburé, un moyen d'admission d'air 20, ici sous la forme d'un répartiteur d'admission d'air 21, et un moyen d'échappement 22 de gaz brûlés permettant de rejeter dans l'atmosphère les gaz brûlés résultant de la combustion du mélange carburé.

Comme mieux visible sur la figure, le moyen d'échappement comprend, à titre d'exemple, un collecteur d'échappement 23 relié à une ligne d'échappement 24 dans laquelle circule les gaz d'échappement provenant du collecteur 23 et dont seule est illustrée une partie du tuyau d'échappement 26 pour l'évacuation dans l'atmosphère des gaz brûlés résultant de la combustion du mélange carburé.

Cette ligne d'échappement porte, avantageusement au plus près du collecteur d'échappement, un échangeur de chaleur bi-mode 28 dont le rôle sera explicité plus en détail dans la description qui va suivre.

Le circuit fermé à cycle de Rankine 12 comprend une pompe volumétrique de compression et de circulation 30 d'un fluide de travail, comme de l'eau, circulant selon le sens horaire indiqué par les flèches C, l'échangeur de chaleur bi-mode 28, une machine de détente réceptrice 32 et un échangeur de refroidissement 34.

Les différents éléments du circuit sont reliés entre eux par des conduites de circulation de fluide 36, 38, 40, 42 permettant de relier successivement la pompe avec l'échangeur bi-mode (conduite 36), l'échangeur bi-mode avec la machine de détente (conduite 38), la machine de détente avec l'échangeur de refroidissement (conduite 40) et l'échangeur de refroidissement avec la pompe (conduite 42) pour que le fluide de travail, sous forme liquide ou sous forme vapeur, circule selon le sens indiqué par les flèches C.

La pompe 30 permet de comprimer l'eau entre l'entrée de la pompe et sa sortie où cette eau, toujours sous forme liquide, est à pression élevée.

Cette pompe est avantageusement entrainée en rotation par tous moyens connus, comme par un moteur électrique (non représenté).

L'eau comprimée est amenée par la conduite 36 à l'entrée 44 de l'échangeur bi-mode 28 d'où elle ressort par la sortie 46 sous forme de vapeur comprimée chaude.

Ainsi, l'échangeur bi-mode 28 assure un mode de fonctionnement (mode évaporateur) avec le changement de phase du fluide de travail du circuit à cycle de Rankine de la phase liquide à la phase vapeur.

Pour réaliser ce changement, l'échangeur bi-mode utilise la chaleur provenant des gaz d'échappement et qui circulent dans la ligne d'échappement 24.

A titre d'exemple, cet échangeur peut être un échangeur à flux croisés avec un flux circulant entre l'entrée d'eau 44 et la sortie 46 de vapeur d'eau et un autre flux avec une entrée de gaz d'échappement chauds 48 et une sortie de gaz d'échappement 50, sortie à partir de laquelle les gaz d'échappement sont évacués dans l'atmosphère au travers du reste de la ligne d'échappement.

La vapeur d'eau provenant de la sortie 46 de l'échangeur 28 est ensuite amenée par la conduite 38 à la machine de détente 32.

A titre d'exemple, cette machine de détente est une turbine de détente dont le rotor (non représenté) est entraîné en rotation par la vapeur d'eau. Ce rotor est avantageusement relié à tout dispositif connu permettant d'utiliser l'énergie mécanique récupérée, par exemple à un système de transmission d'un véhicule pour l'entrainement des roues, ou de transformer l'énergie mécanique récupérée en une autre énergie, comme par exemple à une génératrice électrique 52.

La vapeur détendue à basse pression sortant de la machine de détente 32 est amenée par la conduite 40 à l'échangeur de refroidissement 34. Cet échangeur de refroidissement (ou condenseur) permet de transformer la vapeur basse pression détendue qui provient de la turbine en une eau sous forme liquide après son passage au travers de ce condenseur.

A titre d'exemple, ce condenseur est formé d'un ensemble de tubes et d'ailettes de refroidissement balayé par un fluide de refroidissement 54 qui traverse le condenseur entre sa face d'entrée et sa face de sortie en refroidissant la vapeur détendue et en la condensant.

Ce fluide de refroidissement est ici de l'air extérieur à température ambiante, mais tout autre fluide de refroidissement, comme de l'eau, peut être utilisé pour assurer la condensation de la vapeur.

L'eau sous forme liquide sortant du condenseur est ensuite amenée par la conduite 42 à la pompe 30.

Le circuit d'injection d'eau 14 comprend un réceptacle de récupération d'eau 56, une pompe de compression et de circulation d'eau 58, un réservoir tampon d'eau récupérée 60 et un dispositif d'injection 62 de l'eau récupérée à l'admission du moteur.

Comme illustré sur la figure à titre d'exemple ce dispositif est sous la forme d'une rampe de distribution 64 reliée une multiplicité d'injecteurs 66 pour injecteur l'eau récupérée dans le répartiteur d'admission 21 ou, comme représenté en traits mixtes sur la figure, directement dans les chambres de combustion 18.

Des conduites de liaison 68, 70, 72 sont respectivement prévues entre le réceptacle de récupération et la pompe, entre la pompe et le réservoir tampon, et entre le réservoir tampon et le dispositif d'injection.

Pour pouvoir réaliser cette injection d'eau à l'admission, le réceptacle 56 récupère l'eau condensée provenant de l'échangeur bi-mode 28.

En effet, lors de l'échange de chaleur entre les gaz d'échappement et le fluide de travail du circuit à cycle de Rankine, ces gaz sont refroidis et la vapeur d'eau contenue dans ces gaz se condense en gouttelettes. Une fois que ces gouttelettes ont atteint une masse suffisamment importantes, elles chutent par gravité dans le réceptacle 56.

L'échangeur de chaleur bi-mode 28 assure ainsi une autre mode de fonctionnement (mode condensation) avec la transformation par condensation de la vapeur d'eau contenue dans les gaz d'échappement en de l'eau.

Ainsi, l'échangeur bi-mode, qui est commun aux deux circuits, fonctionne selon un mode d'évaporation pour le circuit à cycle de Rankine 12 et selon un mode de condensation pour le circuit d'injection d'eau 14.

Cette eau condensée contenue dans le réceptacle 56 circule ensuite, sous l'effet de la pompe 58, dans les conduites 68, 70 pour aboutir dans le réservoir tampon 60 (d'environ 0,2 litres à 2 litres) à partir duquel elle est amenée au dispositif d'injection 62 pour être injectée à l'admission du moteur.

Grâce à cela le réservoir tampon 60 est constamment pourvu en eau pour le circuit d'injection 14 sans qu'une intervention extérieure manuelle ne soit nécessaire

Avantageusement, il peut être prévu, sur la conduite 68 ou sur la conduite 70, un dispositif de purification d'eau (non représenté) permettant de stocker dans le réservoir 60 de l'eau débarrassée de la majorité de ses impuretés.

## Revendications

1. Moteur à combustion interne, notamment pour véhicule automobile, comportant au moins un cylindre (16) avec une chambre de combustion (18), un moyen d'admission d'air (20), et un moyen d'échappement (22) de gaz brûlés, **caractérisé en ce qu'il** comprend un échangeur de chaleur (28) commun à un circuit fermé à cycle de Rankine (12) et à un circuit d'injection d'eau (14) à l'admission du moteur.

2. Moteur à combustion interne selon la revendication 1, **caractérisé en ce que** l'échangeur de chaleur commun (28) est placé sur le moyen d'échappement (22).

3. Moteur à combustion interne selon la revendication 1 ou 2 dans lequel le moyen d'échappement comprend un collecteur d'échappement (23) et une ligne d'échappement (24), **caractérisé en ce que** l'échangeur de chaleur commun (28) est placé sur la ligne d'échappement.

4. Moteur à combustion interne selon l'une des revendications précédentes, **caractérisé en ce que** l'échangeur de chaleur commun (28) est un échangeur bi-mode avec un évaporateur pour vaporiser le fluide de travail du circuit à cycle de Rankine et avec un condenseur pour transformer en eau la vapeur d'eau des gaz d'échappement pour le circuit d'injection d'eau.

5. Moteur à combustion interne selon l'une des revendications précédentes, **caractérisé en ce que** l'échangeur de chaleur commun (28) comprend une entrée (44) et une sortie (46) du fluide de travail du circuit à cycle de Rankine ainsi qu'une entrée (48) et une sortie (50) des gaz d'échappement.

6. Moteur à combustion interne selon la revendication 5, **caractérisé en ce que** l'entrée (44) du fluide de travail de l'échangeur (28) est relié à la pompe de compression et de circulation (30) du circuit à cycle de Rankine.
